(19) Europäisches Patentamt / European Patent Office / Office européen des brevets

(11) **EP 4 650 860 A1**

(12) **EUROPEAN PATENT APPLICATION**

(43) Date of publication:
**19.11.2025 Bulletin 2025/47**

(21) Application number: **24315233.7**

(22) Date of filing: **14.05.2024**

(51) International Patent Classification (IPC):
**G02C 7/02** (2006.01)    **G02C 7/06** (2006.01)
**G02C 7/08** (2006.01)    **G02B 27/01** (2006.01)

(52) Cooperative Patent Classification (CPC):
**G02C 7/027; G02C 7/061; G02C 7/081;**
G02B 2027/0178

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Essilor International
94220 Charenton-Le-Pont (FR)**

(72) Inventors:
• **Barreto, Noemi
  91450 SOISY SUR SEINE (FR)**
• **Baillet, Estelle
  94000 CRETEIL (FR)**
• **Guilloux, Cyril
  75009 PARIS (FR)**

(74) Representative: **Plasseraud IP
104 Rue de Richelieu
CS92104
75080 Paris Cedex 02 (FR)**

(54) **EYEPIECE ADAPTED FOR EMERGING PRESBYOPES**

(57)    The invention relates to a method (100) for determining a parameter of a progression profile (320, 420, 610, 620) for an eyepiece (710) intended for a user, the method comprising:

obtaining (110) a prescription for the user, the prescription being indicative of at least an optical power suitable for far vision,

measuring (140) or estimating (160) a remaining accommodation of the user, said remaining accommodation corresponding to the shorter distance for which the user corrected for far vision manages to have a sharp vision, and

determining (170) a parameter of the progression profile based on both the prescription and the remaining accommodation.

FIG. 1

# Description

## Technical Field

This disclosure pertains to the field of ophthalmic optics.

The disclosure more particularly relates to a method for determining a parameter of a progression profile for an eyepiece intended for a user and to a corresponding eyepiece and system.

## Background Art

Traditionally, eyeglasses and contact lenses have been the primary means of addressing refractive errors such as myopia, hyperopia, astigmatism, and presbyopia.

With the advent of progressive addition lenses (PALs), multifocal vision correction became possible, enabling users to see clearly at various distances without the need for multiple pairs of glasses. However, the adaptation to these multifocal lenses has often been challenging for users due to the need for precise alignment and the potential for visual discomfort during the period of adjustment.

According to the state-of-the-art, it is known to provide emerging presbyopes with lenses having a fixed power variation recommended according to the age of the wearer. The power profile of these lenses is chosen so as to exhibit a short progression length in order to ensure good accessibility to the boost power provided by the lens.

However, according this known approach, the recommended fixed power variation tends to be inaccurate for some wearers.

There is a need for methods and systems allowing providing the right power progression to each wearer, in order to improve wearer comfort, near-vision quality and to facilitate adaptation of the wearer to a progressive optical design.

## Summary

This disclosure improves the situation.

It is proposed a method for determining a parameter of a progression profile for an eyepiece intended for a user, the method comprising:

> obtaining a prescription for the user, the prescription being indicative of at least an optical power suitable for far vision,
> measuring or estimating a remaining accommodation of the user, said remaining accommodation corresponding to the maximum ability of the user to accommodate, and
> determining a parameter of the progression profile based on both the prescription and the remaining accommodation.

In an example, the maximum ability of the user to accommodate is defined as the inverse of the shortest distance the user can see when he/she is corrected for far vision.

In an example, the method further comprises obtaining a physiological parameter of the user and the parameter of the progression profile is further determined based on the physiological parameter.

In an example, the method further comprises determining a personalized gaze direction for applying the progression profile based on the physiological parameter.

In an example, the method further comprises obtaining a visual behavior parameter of the user and the parameter of the progression profile is further determined based on the visual behavior parameter.

In an example, the method further comprises determining a personalized gaze direction for applying the progression profile based on the visual behavior parameter.

In an example, the physiological parameter of the user is at least one element of a list comprising a phoria at a near viewing distance, a gradient of accommodation, a lead of accommodation, a lag of accommodation, an accommodative facility, a high order aberration, and chromatism (i.e. eye power sensitivity to different wavelengths).

In an example, the visual behavior parameter of the user is at least one element of a list comprising a lowering gaze angle and a gaze distance.

In an example, the parameter of the progression profile is at least one element of a list comprising an addition, a position of a near vision point or of a near vision area, an optical power profile along a meridian line and a spatial profile of the meridian line.

In an example, the remaining accommodation of the user is determined using a predictive model based on a database comprising accommodation values linked to individual datasets, wherein the individual datasets each comprise at least two parameters selected from a group of individual-specific parameters and environmental light parameters.

In an example, the individual-specific parameters include elements of a list comprising an age, a pupil size, a lead or lag of accommodation and the prescription.

In an example, the environmental light parameters include elements of a list comprising a light intensity, a light color, a retinal illumination and a likeliness of glare.

It is further proposed an eyepiece configured to provide vision correction to a user, comprising: an optical portion configured to correct far vision according to a prescription of the user, and a progression profile integrated into the eyepiece,

wherein the progression profile is adapted to compensate for a measured or estimated remaining accommodation of the user.

In an example, the eyepiece is an active eyepiece configured to receive input representing and actively control the progression profile based on the input, to compensate for the measured or estimated remaining accommodation of the user. For instance, the eyepiece may comprise a controllable optical element, an input interface configured to receive an input and a progression profile controller configured to actively control the controllable optical element based on the input to adapt the progression profile to compensate for the measured or estimated remaining accommodation of the user.

In an example, the progression profile is determined based on the following relation:

$\alpha = k*Add + \alpha(0)$

with $\alpha$ being a lowering gaze angle,
k being a coefficient greater than or equal to 5 and smaller than or equal to 10,
Add being an addition determined based on the prescription and the measured or estimated remaining accommodation, and
$\alpha(0)$ being a value, greater than or equal to 10 and smaller than or equal to 25, of $\alpha$ for which Add = 0.

It is further proposed a determining system for determining a parameter of a progression profile for an eyepiece intended for a user, the determining system being configured to:

obtain a prescription for the user, the prescription being indicative of at least an optical power suitable for far vision,

measure or estimate a remaining accommodation of the user, said remaining accommodation corresponding to the maximum ability of the user to accommodate, and
determine a parameter of the progression profile based on both the prescription and the remaining accommodation.

It is further proposed a system comprising:

the above eyepiece,
an eyepiece identifier uniquely associated with the eyepiece, and
a user record of a user being an intended user of the eyepiece,
wherein the user record is stored in a database,
wherein the user record includes a prescription of the user and the measured or estimated remaining accommodation of the user, and
wherein the eyepiece identifier is linked to the user record.

Unless specifically stated otherwise, as apparent from the following discussions, it is appreciated that throughout the specification discussions utilizing terms such as "computing", "calculating", "generating", or the like, refer to the action and/or processes of a computer or computing system, or similar electronic computing device, that manipulate and/or transform data represented as physical, such as electronic, quantities within the computing system's registers and/or memories into other data similarly represented as physical quantities within the computing system's memories, registers or other such information storage, transmission or display devices.

Embodiments of the present invention may include apparatuses for performing the operations herein. This apparatus may be specially constructed for the desired purposes, or it may comprise a general-purpose computer or Digital Signal Processor ("DSP") selectively activated or reconfigured by a computer program stored in the computer. Such a computer program may be stored in a computer readable storage medium, such as, but is not limited to, any type of disk including floppy disks, optical disks, CD-ROMs, magnetic-optical disks, read-only memories (ROMs), random access memories (RAMs) electrically programmable read-only memories (EPROMs), electrically erasable and programmable read only memories (EEPROMs), magnetic or optical cards, or any other type of media suitable for storing electronic instructions, and capable of being coupled to a computer system bus.

The processes presented herein are not inherently related to any particular computer or other apparatus. Various general-purpose systems may be used with programs in accordance with the teachings herein, or it may prove convenient to construct a more specialized apparatus to perform the desired method. The desired structure for a variety of these systems will appear from the description below. In addition, embodiments of the present invention are not described with reference to any particular programming language. It will be appreciated that a variety of programming languages may be used to implement the teachings of the inventions as described herein.

**Brief Description of Drawings**

Other features, details and advantages will be shown in the following detailed description and on the figures, on which:

**Fig. 1**

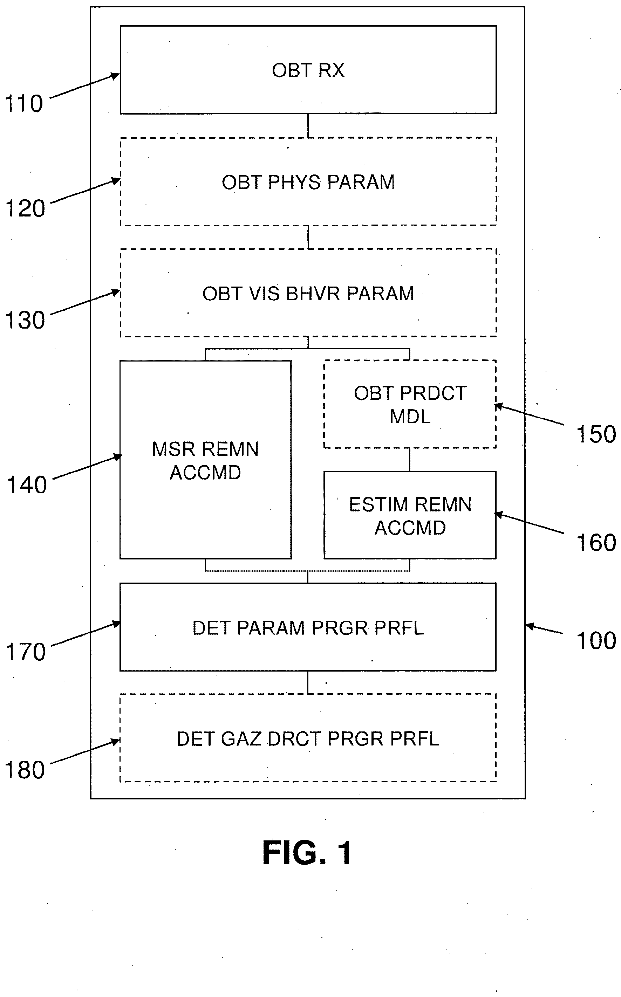

[Fig. 1] illustrates an example method for determining a parameter of a progression profile for an eyepiece intended for a user.

**Fig. 2**

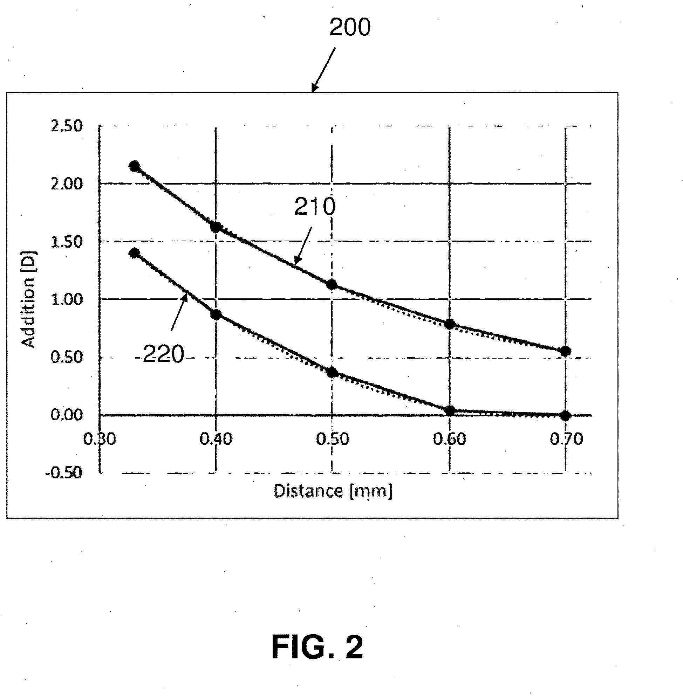

[Fig. 2] illustrates example relations for calculating an addition value for an eyepiece intended for a user based on a remaining accommodation of the user.

**Fig. 3**

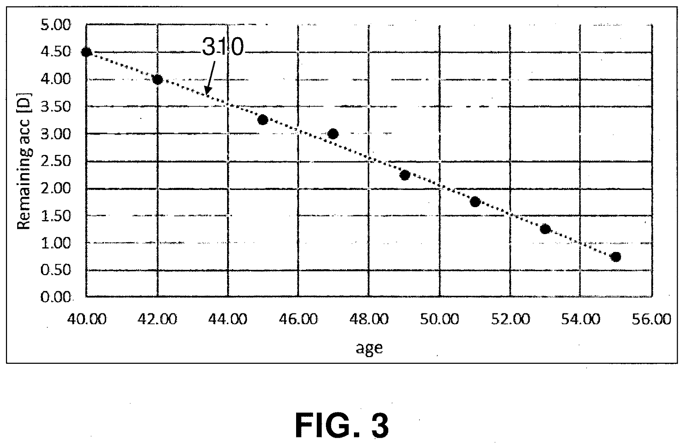

[Fig. 3] illustrates a state-of-the-art relation for estimating a remaining accommodation of a user based on an single parameter being an age of the user.

**Fig. 4 and 5**

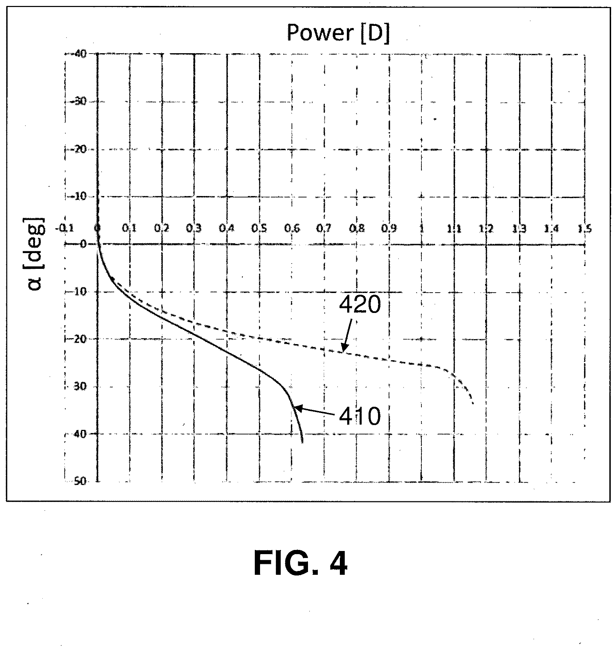

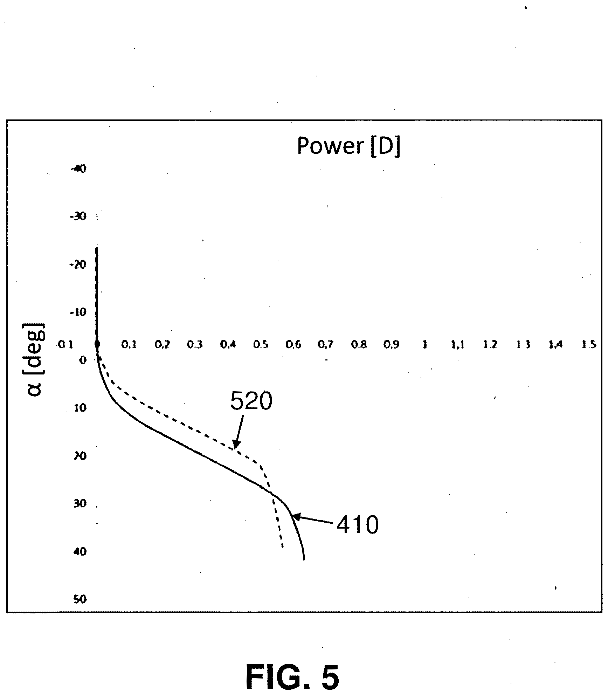

[Fig. 4] and [Fig. 5] illustrate comparisons of example progression profiles determined based on prescription and on a measure of a remaining accommodation with a reference example of progression profile determined based on prescription and age alone.

**Fig. 6**

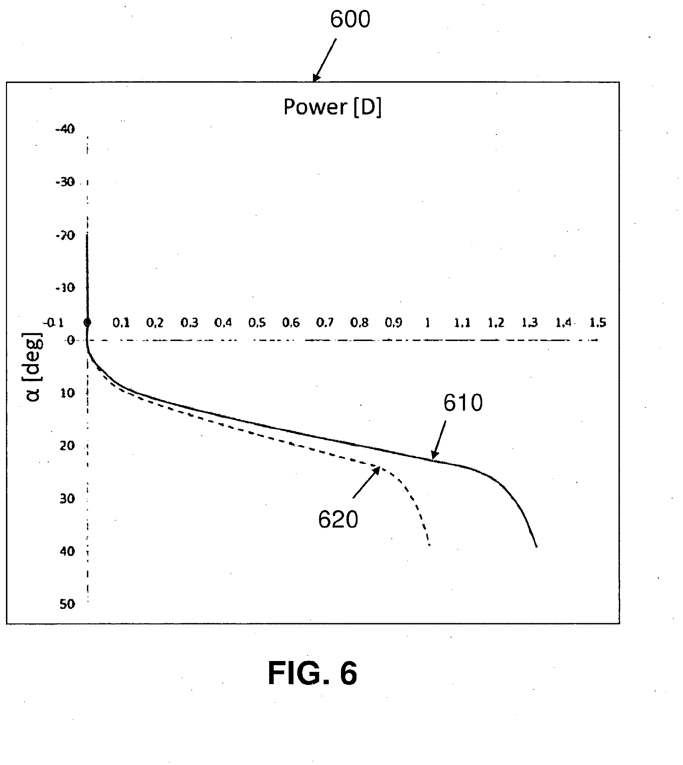

[Fig. 6] illustrates example progression profiles determined based on prescription and on an estimate of a remaining accommodation.

**Fig. 7**

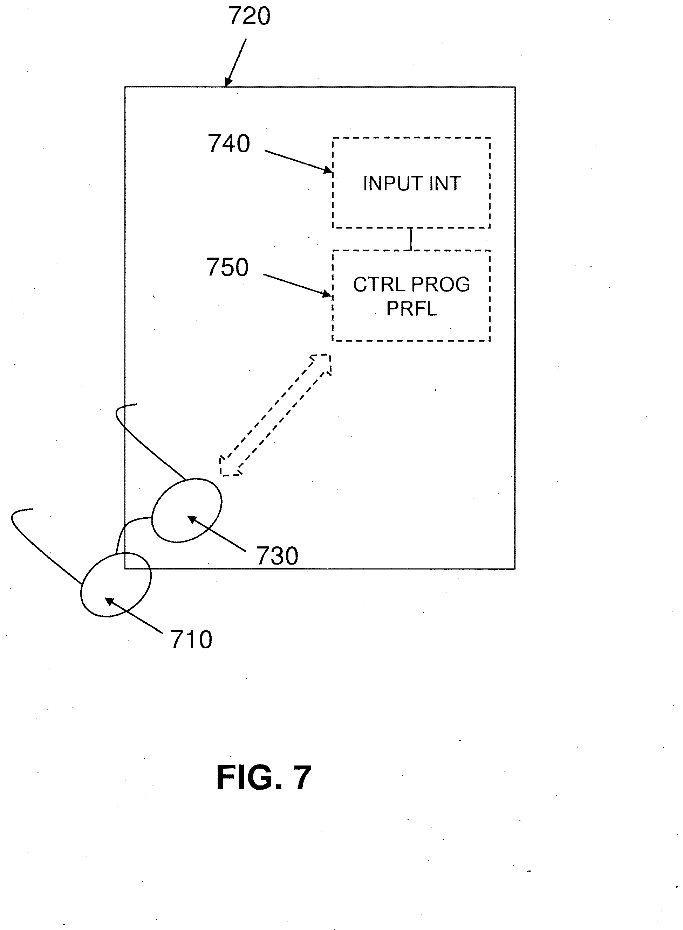

[Fig. 7] illustrates an example head mounted device.

**Fig. 8**

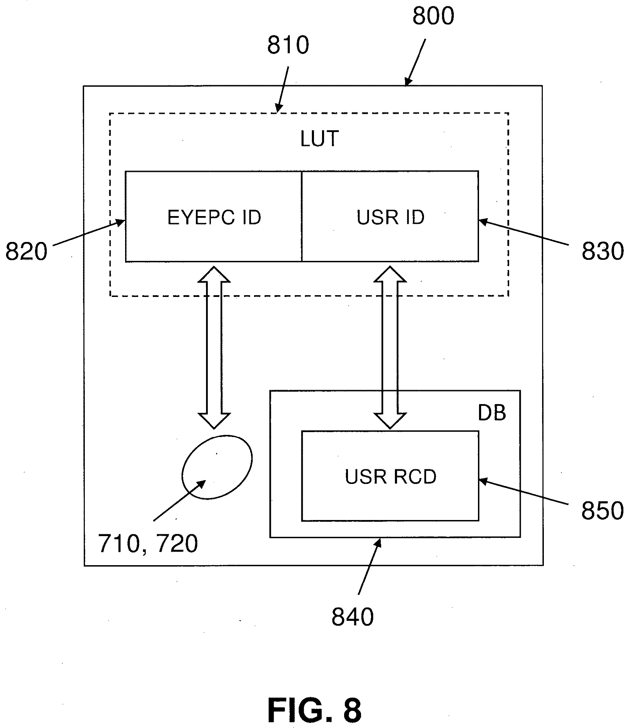

[Fig. 8] illustrates an example system comprising an eyepiece, an eyepiece identifier, and a user record.

**Description of Embodiments**

The proposed technique generally aims at providing, for a specific user, an eyepiece having a progression profile based on a measure or a precise estimate of a remaining accommodation of the user, in order to better fit the user's needs.

The proposed technique provides several benefits.

By tailoring the eyepiece based on individual remaining accommodation, users can achieve immediate comfort with the eyepiece. This individualization caters to both emmetropes and ametropes, facilitating easier and faster adaptation to the eyepiece.

Unlike traditional methods, which often use age as the primary factor for determining lens addition, the proposed technique accounts for the actual visual capability of the user, reducing the risk of over or under-correction.

The proposed technique allows users to enjoy better optic ergonomics, easily finding the sharp area on the lens. The personalized design also contributes to better postural ergonomics and near vision comfort, offering less distortion, wider visual fields, and reduced visual fatigue due to an improved depth of field.

The proposed technique may further contribute to reassuring ECPs and patients about adaptation success, in particular for younger presbyope users with specific visual behaviors.

The proposed technique may be combined with advanced refraction information (such as Advanced Vision Accuracy or AVA) to further refine the progression profile, ensuring small steps in progression and a precise fit.

It is now referred to figure 1, which illustrates an example method 100 according to the proposed technique for determining a parameter of a progression profile for an eyepiece intended for a user.

The method comprises, at least:

obtaining 110 a prescription for the user,
measuring 140 or estimating 160 a remaining accommodation of the user, and
determining 170 a parameter of the progression profile.

The user refers to an individual who requires vision correction and is the intended wearer of the eyepiece. The user's unique visual characteristics, including optical power needs, physiological parameters, and visual behaviors, may influence the customization of the eyepiece. The user might vary in age, occupation, and visual health status, impacting their specific requirements for vision correction.

The prescription is a formal recommendation provided by an eye care professional, specifying the optical power required for correcting the user's vision. It typically contains values, expressed in diopters, for sphere (correcting nearsightedness or farsightedness), cylinder, and axis (correcting astigmatism), and may include an addition (for presbyopia) also expressed in diopters. The prescription reflects the user's current visual acuity, any refractive errors, and the required lens power for clear vision at various distances. It may also include notes on pupillary distance, lens material preferences, and any other special vision correction needs.

In the context of the present disclosure, the prescription is indicative of at least an optical power suitable for far vision. The "optical power suitable for far vision" is the lens power needed to correct distant vision. It is often represented in diopters and may correct refractive errors like myopia or hyperopia, enabling the user to see distant objects clearly.

The accommodation indicates the user's ability to focus on objects at various distances, especially closer objects, despite being corrected for far vision. This measurement reflects the flexibility of the eye's lens and its ability to change shape, enabling clear vision across different distances. Lower remaining accommodation often correlates with aging or certain eye conditions.

The remaining accommodation is the capacity, or maximum ability, of the user to accommodate.

The remaining accommodation may be obtained by an objective measurement or a subjective measurement.

The objective measurement may be of the maximum ability of the user to accommodate may be the measurement of the power of the eye as sciascopy method or through biometric measurements as measuring the shape of the crystalline lens.

The subjective measurement of the maximum ability of the user to accommodate may be a "push up" test, the maximum ability being defined as the inverse of the shortest distance the user can see when he/she is corrected for far vision (push up ). In the case of a subjective measurement, the maximum ability of the user to accommodate incorporates aspects such as depth of focus which is correlated to pupil size and such as neuronal processing of information.

In the context of the present disclosure, the remaining accommodation may be expressed as the inverse of a distance, and may be calculated as the absolute value of the difference between the proximity (in diopters) of the remotum and the proximity (in diopters) of the proximum. Specifically, the remaining accommodation is the shortest functional visual range of the user when the user's vision is corrected for distance viewing. The remaining accommodation may refer to the maximum remaining accommodation which is the absolute limit of the eye's ability to focus on near objects when the vision is corrected for distance. It represents the shortest distance at which the user can still achieve sharp focus under optimal conditions or under low light conditions in order to increase the degree of personalizing. However, maintaining focus at this maximum limit may not always be comfortable for prolonged periods. Alternately, the remaining accommodation may refer to the comfortable remaining accommodation which is a more practical measure representing the shortest distance at which the user can comfortably and sustainably focus on near objects while corrected for distance vision. It considers not just the physical capability of the eye but also factors in comfort and ease of focusing over longer durations.

Measuring the remaining accommodation involves clinically assessing how well the eye's lens can adjust to focus on near objects. Techniques might include, for instance:

using optometric instruments to observe the eye's ability to change focus from far to near distances,
performing tests that measure how the lens of the eye adjusts when looking at objects at different distances, especially closer ranges,
performing a dynamic retinoscopy method, where an optometrist observes the reflection of light from the eye while the user focuses on an object moving closer and farther away, and/or
requesting subjective feedback by asking the user to describe their experience and ability to see objects clearly at varying distances, particularly at closer ranges than what their far vision prescription corrects for.

Estimating the remaining accommodation involves using factors like age, visual habits, visual health history, and/or statistical data to approximate the user's ability to focus on near objects. This approach is particularly suitable in cases where direct measurement is impractical or unavailable.

The progression profile is a component of the eyepiece which represents a gradient of lens power, varying from the power suitable for far vision to the power needed for near vision. It is customized based at least on the user's remaining accommodation. More generally, the progression profile may be customized on the user's unique visual needs, allowing for seamless transition and clarity across different viewing distances.

Parameters of the progression profile may include various aspects such as the addition value (extra magnifying power for near vision), the location of the near vision point or area on the lens, the gradient of optical power along a specific line (meridian) on the lens, and the spatial distribution of the optical power which represents the lateral distribution of optical powers on one or both sides of this specific line.

Determining a parameter of the progression profile involves calculating and selecting the appropriate value(s) defining said parameter of the progression profile, tailored to the user's specific needs. This determination takes into account the user's prescription, the user's remaining accommodation, and potentially other factors, for instance physiological and visual behavior parameters.

The method may further comprise determining 180 a personalized gaze direction for applying the progression profile. This involves determining the specific angle and distance of gaze that the user will most commonly use while wearing the eyepiece for near distance viewing activities.

As an exemplary implementation, determining the parameter of the progression profile and the personalized gaze direction may involve defining a specific addition or boost value for a specific area of the lens, said specific area of the lens being chosen to correspond to a specific viewing distance according to the user's needs.

The method may further comprise obtaining 120 one or more physiological parameters of the user and/or obtaining 130 one or more visual behavior parameters of the user.

Physiological parameters pertain to the physical aspects of the eyes, while visual behavior parameters relate to how the user typically uses their eyes in daily activities.

Physiological parameters of the user refers to measurable physical attributes of one eye or both eyes, and may include, for instance:

a phoria, which is a tendency of the eye(s) to deviate inwards or outwards when relaxed and which is measured at a close range or near viewing distance,
a gradient of accommodation, which is a measured value that takes into account the lag of accommodation and negates proximal convergence between two measurements, and which involves a variation of accommodation by the interposition of spherical lenses,
a lead or a lag of accommodation, which represents the distance between the focus point of the eye(s) and a position of an object placed at a near viewing distance, wherein a lead of accommodation corresponds to when the focus point is closer than the actual object and a lag of accommodation corresponds to when the focus point is further than the actual object,

an accommodative facility, which represents the speed at which the eye(s) can change focus between different distances,

high order aberrations, which are optical irregularities of a uniform beam of light entering into the eye, passing through the pupil and reaching the retina, and/or

chromatism, which is the difference of focus of the different wavelengths of light (colors) caused by the dispersion of the eye(s).

The measurements of the physiological parameters of the user may be impacted by the presence and/or the amplitude of a provided addition.

A possible procedure for measuring an impact of an addition on a physiological parameter of the user is now described by considering the phoria at a near distance as an example of physiological parameter of the user.

The user is provided with optimal vision correction for distance vision. Lighting is adjusted to ensure optimal target contrast for near vision. A near vision target comprising letters is placed at a distance of 40 cm from the eye of the user, with the letters comprising 80% of the maximum near visual acuity, The phoria is measured a first time, with this setup, using a selected method (e.g. masking, Von Graefe, Thorington, or Howell method),

The setup is then modified by further providing a lens addition to the user, while ensuring that the user can see the letters clearly without the use of prisms. The phoria is then measured a second time with this modified setup, using the same method as in the first phoria measurement.

Visual behavior parameters of the user reflect how the user typically looks at objects and may include, for instance:

a lowering gaze angle which is an angle at which the user tends to lower their gaze to look at objects, especially close ones, and/or

a gaze distance, which is the typical distance at which the user views objects, such as a reading distance or a computer screen distance.

Specifics of determining progression profile parameters based on the user's remaining accommodation, and further refined by physiological and or visual behavior parameters, are described below.

The remaining accommodation may influence any parameter of the progression profile, and may primarily influence addition value. A higher remaining accommodation might lead to a lower addition value, providing the necessary power for near vision without overcorrecting.

Regarding physiological parameters:

the phoria at near viewing distance may be utilized in determining the addition value and/or the gradient of optical power along the meridian and the spatial distribution of optical power, affecting the lateral and vertical positioning of power zones in the lens, and may need prismatic correction,

the gradient of accommodation ($\Delta$) may influence the addition value and/or the gradient of optical power along the meridian, with, according to the user, a smoother or stronger gradient being required for a broader accommodation range, ensuring a comfortable transition from far to near vision,

the lead or lag of accommodation ($\delta$) may affect both the addition value and the spatial distribution of optical power, since depending on whether there is a lead or lag, adjustments can be made to optimize the positioning and power distribution for near vision tasks, and

the accommodative facility may impact the spatial distribution of optical power, ensuring that transitions across different power zones are quick and comfortable, matching the user's ability to shift focus at different speeds.

Regarding visual behavior parameters,

the lowering gaze angle may influence the location of the near vision point or area on the lens, dictating how the lens should be designed to align with the user's natural gaze when shifting to closer tasks, and

the gaze distance may play a role in determining the addition value and/or the spatial distribution of optical power across the lens, ensuring that the lens provides optimal clarity at the user's usual viewing distances, such as when reading or using digital devices.

By directly relating physiological and visual behavior parameters to specific aspects of the progression profile, a more accurate and user-centric approach may be taken in designing eyepieces, offering personalized vision correction based on individual needs and characteristics.

The method may further comprise obtaining a predictive model 150. The predictive model is a statistical or computational tool that uses accumulated data to predict certain aspects of a user's visual needs. It can process various individual-specific and environmental light parameters to estimate factors like the remaining accommodation or suitable progression profile for the eyepiece.

Individual-specific parameters are parameters that are unique to each user. They may include age, pupil size and/or one or more of the physiological parameters and/or visual behavior parameters of the user as defined above. Some, possibly all, of these physiological parameters and/or visual behavior parameters may be obtained by conducting measurements on the user.

Modeling remaining accommodation according to age is well known. For instance, figure 3 provides a simple graphical representation of a known relation 310 associating remaining accommodation with age. This approach has however proven inaccurate.

The environmental light parameters are factors related to the user's typical visual environment, such as:

light intensity, which is the brightness level the user is typically exposed to,
light color, which is the spectrum of the light the user is typically exposed to, and which can affect visual comfort and perception,
retinal illumination, which is amount of light which typically reaches the retina,
glare, which represents the presence likeliness of intense light sources that can cause discomfort or visual impairment.

An environmental light parameter in conjunction with an individual-specific parameter, such as age, allows determining a regional dependency model of remaining accommodation, reflecting the differing needs of users living in different areas of the globe and thusly subjected to varying visual environments.

The predictive model is trained using a database comprising individual datasets respectively associated to individual users.

Estimating the remaining accommodation of the intended user of the eyepiece may involve, after the predictive model has been trained, feeding the predictive model with the individual dataset of the intended user and obtain the estimate of the remaining accommodation of the intended user as a corresponding prediction result.

In the context of the disclosure, the individual dataset for the intended user of the eyepiece comprises a plurality of parameters. This means that the individual dataset for the intended user of the eyepiece comprises:

either at least two individual specific parameters of the intended user of the eyepiece, or
at least one individual specific parameter and at least one environmental light parameter of the intended user of the eyepiece.

Different example implementations of the above method are now described.

In an example implementation, the user's remaining accommodation is measured 140 either directly using optometric instruments or indirectly using subjective assessments. The measurement is used to tailor the progression profile of the eyepiece by determining 170 a series of specific addition values respectively associated to a corresponding viewing distance. Examples of suitable viewing distances are 33 cm, 40 cm, 60 cm and 70 cm.

The determination of addition value as a function of distance may be derived from literature data. Figure 2 is a diagram 200 representing addition as a function of distance. This diagram illustrates example relations 210, 220 that may be applied for calculating an addition value for an eyepiece intended for a user based on a remaining accommodation of the user. Both example relations are determined by applying fitting techniques to literature data obtained for a specific value of remaining accommodation and express addition (Add), in diopters (D), as a function of distance (d), in millimeters (mm).

Example relation 210 applies to a remaining accommodation of 1.75 D and is formulated as:

$$Add = 8.4607d^2 - 12.948d + 5.4855$$

Example relation 220 applies to a remaining accommodation of 3.25 D and is formulated as:

$$Add = 11.792d^2 - 15.945d + 5.3795$$

Alternately or additionally, when the prescription comprises an addition, the prescribed addition may be associated to a reference viewing distance and incorporated to the determined series of addition values.

The determined series of addition values may be provided as input of a lens design optimization algorithm using conventional fitting techniques to customize the power profile along the meridian line and the spatial profile.

The lens design optimization algorithm may further use a series of parameters influencing the spatial position of the progression profile on the eyepiece may be derived from literature data. For instance, it is known that for non presbyopes, the average vertical gaze direction at near viewing distances corresponds to a lowering angle of 21°. It is further known that the lowering angle corresponding to the vertical gaze direction at near viewing distances increases with the prescribed addition.

To illustrate this point, it is now described an example of how the lens design optimization algorithm may be configured to determine the vertical position of a given point of a near vision area, said given point defined as the vertical gaze direction providing an optical power corresponding to a recommended addition for a viewing distance of 40 cm.

A predetermined relation may be applied between the lowering angle, noted $\alpha(40cm)$, defining the vertical position of the given point and the recommended addition, noted Add, for the viewing distance of 40cm, which is either the prescribed addition or a value of addition determined and associated to the viewing distance of 40 cm.

An example suitable relation is a linear relation $\alpha(40cm) = 8.12 * Add + 17.75°$. This example relation ensures that the near vision area is vertically positioned

at $\alpha$(40cm) = 21° when the prescribed or determined addition is equal to 0.4D, as this is the natural gaze direction to see at near for non presbyopes, and

at $\alpha$(40cm) = 34° when the prescribed or determined addition is equal to 2.0D, as this is the average gaze direction for near vision on progressive lenses, managing near vision accessibility and peripheral aberrations.

Another example suitable relation is a linear relation $\alpha$(40cm) = 5.2 * Add + 21°. This example relation ensures that the near vision area is vertically positioned

at $\alpha$(40cm) = 21° when the prescribed or determined addition is equal to 0 D, and

at $\alpha$(40cm) = 34° when the prescribed or determined addition is equal to 2.5D.

More generally, the relation between the lowering angle defining the vertical position of a given point of a near vision area and the recommended addition, provided at said given point for a given viewing distance, can be expressed as $\alpha$ = k*Add + $\alpha$ (0) with $5 \leq k \leq 10$ and $10 < \alpha$ (0) < 25.

This example implementation is particularly beneficial for young presbyopes, offering a personalized vision correction that enhances comfort and visual clarity.

In an example implementation, alongside measuring 140 the remaining accommodation, visual behavior parameters of the user are obtained 130, specifically the user's gaze lowering for several distances. This might involve additional measurements like a near vision behavior (NVB) assessment. The power profile along the meridian line and the spatial profile are then adjusted through lens optimization techniques, not only based on the remaining accommodation but also on the user's typical gaze direction and distance. By accounting for individualized gaze behavior, this example implementation offers an even more tailored visual experience, especially for activities like reading or computer work.

In an example implementation, alongside measuring 140 the remaining accommodation, physiological parameters are obtained by additional measurements 120. The addition value for the lens may then be determined for a single distance or for several distances, by using a combination of the remaining accommodation measurement and the additional physiological measurements. This example implementation version provides a highly personalized eyepiece, factoring in a wide range of visual factors to enhance comfort and effectiveness for the user.

In an example implementation, the user's remaining accommodation is estimated 160 as a prediction result using a comprehensive predictive model that includes a database of various accommodation values linked to individual datasets. This example implementation is ideal for scenarios where direct measurement is impractical, offering a personalized lens based on a broad set of predictive data.

Example progression profiles are now discussed, in relation to figures 4 and 5, to allow a side-by-side comparison between the proposed technique and the state-of-the-art. These example progression profiles correspond to the same example user aged 39. The prescription of the example user comprises a sphere power Rx = -2.00 for far distance and does not comprise any addition.

A first progression profile 410 established according to state-of-the-art techniques corresponds to a recommended addition of 0.6D associated to a lowering angle of $\alpha$ = 32°. This recommended addition is obtained based on age alone and without accounting for any form of measurement or of estimation of remaining accommodation that may be provided according to the proposed technique.

A second progression profile 420 established according to an example implementation of the proposed technique is obtained by leveraging a measured remaining accommodation Acc = 2.75 D. Its prominent features include a recommended addition Add(40) = 1.12D at a viewing distance of 40cm associated to a lowering gaze angle of 27° and a recommended addition Add(50) = 0.625D at a viewing distance of 50cm. Further, considering the above values as optimization targets, the power profile is smoothed by applying known optical design optimization techniques, resulting in a lowering gaze angle of 22° at a viewing distance of 50cm.

A third progression profile 520 established according to an example implementation of the proposed technique is obtained by leveraging a measured remaining accommodation Acc = 4.00 D. Its prominent features include a recommended addition Add(40) = 0.5D at a viewing distance of 40cm and an absence of recommended addition - Add(50) = 0D - at a viewing distance of 50cm as the user has sufficient remaining accommodation not to require any addition at such viewing distance. The lowering gaze angle for Add(40) = 0.5D is 22°, which is a little bit higher than the average value for non presbyopes.

Additional examples of progression profiles are now discussed, in relation to figure 6, to allow a side-by-side comparison between two distinct implementations of the proposed technique.

These additional example progression profiles both correspond to an example user aged 45. The prescription of the example user comprises a sphere power Rx = -2.00 for far distance and does not comprise any addition. The example user has a measured remaining accommodation Acc = 2.50 D.

Some physiological parameters of the example user are further available, specifically:

an exophoria of 5Δ when focusing at a near distance, indicating a pronounced deviation of the eyes during a near vision activity, and

an indication that the exophoria increases to 7Δ with an increase in lens power of an additional 1.00D.

A first additional progression profile 610 established according to an example implementation of the proposed technique is obtained by leveraging the measured remaining accommodation and without taking into account the exophoria. Its prominent features include a recommended addition Add(40) = 1.25D at a viewing distance of 40cm associated to a lowering gaze angle of 28°, corresponding to an inset of 2.3 mm assuming standard wearing conditions. This recommended addition according to the proposed technique differs from the state-of-the-art approach of deriving an addition value from age, which would result in a recommended addition of 1.1D associated with a lowering gaze angle of 25°.

In the second additional progression profile 620, the customization is enhanced by incorporating the example user's specific physiological characteristics. This profile not only leverages the measured remaining accommodation, as in the first profile 610, but also accounts for the example user's exophoria. Here, the increase in exophoria from 5Δ to 7Δ with an augmented lens power indicates a relationship between the user's lateral eye deviation and the strength of the lens. To address this, the recommended addition value for a viewing distance of 40cm is adjusted downward to 0.90D. This adjustment compensates for the increased exophoria, ensuring that the lens power does not exacerbate the eye deviation. Associated with this adjusted addition is a lowering gaze angle of 25°. This alteration results in a corresponding inset measurement of 2.13 mm under standard wearing conditions, slightly different from the first profile's inset of 2.3 mm. When the exophoria is further factored with the adjusted addition value of 0.90D, the inset requirement is fine-tuned to 2.0 mm. This precise calibration ensures optimal alignment of the lens's near vision zone with the user's unique visual behavior and eye position, offering a personalized visual experience that differs significantly from the first progression profile 610.

It is now referred to figure 7 which illustrates an example head mounted device comprising two eyepieces 710, 730.

An eyepiece in the context of a head-mounted device refers to an element comprising or consisting of an optical component through which a user views objects. This optical component can take various forms, such as an optical lens, which is traditionally used for vision correction and may have various properties including being plano (without corrective power), ophthalmic (designed specifically for correcting vision issues), tinted (with added coloration for reducing glare or for aesthetic purposes) and/or incorporate advanced technologies like heads-up displays.

The optical component of an eyepiece 710, 730 comprises an optical portion and a progression profile. The optical portion is the part of the optical component that directly influences how light entering the eyes is focused. This portion is tailored according to the user's prescription, which indicates the corrective measures needed for the user to have clear far vision. Prescriptions typically correct for myopia (nearsightedness), hyperopia (farsightedness), astigmatism (distorted vision), or presbyopia (age-related difficulty focusing on close objects). The optical portion is configured to correct far vision according to a prescription of the user. The progression profile is integrated into the eyepiece and is adapted to compensate for a measured or estimated remaining accommodation of the user. The eyepiece is therefore tailored based on the individual remaining accommodation of the user.

The eyepiece may refer to a larger system that includes not only the optical component but also hardware for mounting them comfortably on a user's head, adjustment mechanisms for aligning them with the eyes, and, in some examples, even systems for monitoring and adjusting the properties of the optical component in real time.

For instance, with the integration of controllable optical elements, the eyepiece may be capable of dynamically altering the optical properties of the optical element in response to real-time input about the user's vision needs. These adjustments would be mediated by a progression profile controller 750, which is a component that actively manages changes in the eyepiece based on inputs, which can be manual adjustments from the user or sensor data from the device itself. An input interface 740 in this context could range from physical dials and switches to touch-sensitive areas or even wireless communication interfaces that receive signals from external devices or sensors.

In this context, the progression profile controller 750 may be configured to receive an input representing a measurement or an estimate of the remaining accommodation of the user and to customize the progression profile of the user, based on this input, by applying predetermined relations.

The predetermined relation may further leverage, beyond the remaining accommodation, any number and types of relevant available parameters, including for instance individual-specific parameters such as physiological parameters of the user and/or visual behavior parameters of the user, and environmental light parameters of a visual environment associated to the user.

It is now referred to figure 8 which illustrates an example system 800 suitable for storing and referencing eyepieces, for example as part of an in-shop storage and referencing system or of a lens manufacturer storage and referencing system.

In this system, each eyepiece 710, 720 is uniquely linked to a distinct eyepiece identifier 820. This identifier is a specific code or marker that distinctly identifies the eyepiece. The eyepiece identifier 820 may for instance be in the form of a serial number, QR code, RFID chip, or any other digital or analog tagging system that allows for easy scanning and recognition, both by digital systems and store personnel.

As an alternative, multiple eyepieces intended for the same user may be associated to a single head-mounted device for the user (or to a single order for the user). For instance, a user who requires different eyepieces or head-mounted devices for various activities - like driving, reading, or computer work - may have them all linked to a single identifier for convenience. In this case, a head-mounted device identifier or an order identifier may be used in place of the eyepiece identifier.

Further, in this system, each user has a user record 850 stored in a database 840. The user record may contain comprehensive optical data such as prescription history, biometric eye measurements, and user preferences for lens materials or coatings. Each user is uniquely linked to a distinct user identifier 830 which may be stored for instance as part of the user record 850.

An association mechanism, which may for instance be provided as a lookup table 810, is configured to associate the eyepiece identifier 820 of an eyepiece with the user identifier 830 of its intended user. Similarly, the head-mounted device identifier or the order identifier may be used by the association mechanism in place of the eyepiece identifier.

The association mechanism might employ sophisticated software that seamlessly integrates with inventory management systems, allowing optometrists or lens manufacturers to quickly match eyepieces with user records.

This association mechanism ensures that an eyepiece which progression profile has a parameter customized for a specific user according to the proposed technique is properly referenced as being intended for this specific user. Additionally, when a user visits their optometrist, the system can swiftly retrieve the appropriate eyepiece for an adjustment or replacement by simply referencing the user's unique identifier.

This system can potentially be integrated with virtual try-on software, allowing users to virtually experience how different eyepieces would improve their vision before the physical product is ordered or retrieved from storage.

**Claims**

1. A method (100) for determining a parameter of a progression profile (320, 420, 610, 620) for an eyepiece (710, 720) intended for a user, the method comprising:

    obtaining (110) a prescription for the user, the prescription being indicative of at least an optical power suitable for far vision,
    measuring (140) or estimating (160) a remaining accommodation of the user, said remaining accommodation corresponding to the maximum ability of the user to accommodate, and

    determining (170) a parameter of the progression profile based on both the prescription and the remaining accommodation.

2. The method according to claim 1, wherein the maximum ability of the user to accommodate is defined as the inverse of the shortest distance the user can see when he/she is corrected for far vision.

3. The method according to claim 1 or 2, further comprising obtaining (120) a physiological parameter of the user and wherein the parameter of the progression profile is further determined based on the physiological parameter.

4. The method of claim 3, further comprising determining (180) a personalized gaze direction for applying the progression profile based on the physiological parameter.

5. The method according to any one of claims 1 to 4, obtaining (130) a visual behavior parameter of the user and wherein the parameter of the progression profile is further determined based on the visual behavior parameter.

6. The method according to claim 5, further comprising determining (180) a personalized gaze direction for applying the progression profile based on the visual behavior parameter.

7. The method according to any one of claims 3 to 6, wherein the physiological parameter of the user is at least one element of a list comprising a phoria at a near viewing distance, a gradient of accommodation, a lead of accommodation, a lag of accommodation, an accommodative facility, a high order aberration, and chromatism; and/or wherein the visual behavior parameter of the user is at least one element of a list comprising a lowering gaze angle and a gaze distance.

8. The method according to any one of claims 1 to 7, wherein the parameter of the progression profile is at least one element of a list comprising an addition, a position of a near vision point or of a near vision area, an optical power profile along a meridian line and a spatial profile of the meridian line.

9. The method of any one of claims 1 to 8, wherein the remaining accommodation of the user is estimated using a predictive model based on a database comprising accommodation values linked to individual datasets, wherein the individual datasets each comprise at least two parameters selected from a group of individual-specific parameters and environmental light parameters.

**10.** The method of claim 9, wherein the individual-specific parameters include elements of a list comprising an age, a pupil size, a lead or lag of accommodation and the prescription; and/or wherein the environmental light parameters include elements of a list comprising a light intensity, a light color, a retinal illumination and a likeliness of glare.

**11.** An eyepiece (710, 720) configured to provide vision correction to a user, comprising:

an optical portion configured to correct far vision according to a prescription of the user, and
a progression profile (320, 420, 610, 620) integrated into the eyepiece,
wherein the progression profile is adapted to compensate for a measured or estimated remaining accommodation of the user.

**12.** An eyepiece according to claim 11, wherein the eyepiece (720) comprises a controllable optical element (730), an input interface (740) configured to receive an input and a progression profile controller (750) configured to actively control the controllable optical element based on the input to adapt the progression profile to compensate for the measured or estimated remaining accommodation of the user.

**13.** An eyepiece according to claim 11 or 12 wherein the progression profile is determined based on the following relation:
$\alpha = k*Add + \alpha(0)$

with $\alpha$ being a lowering gaze angle,
k being a coefficient greater than or equal to 5 and smaller than or equal to 10,
Add being an addition determined based on the prescription and the measured or estimated remaining accommodation, and
$\alpha(0)$ being a value, greater than or equal to 10 and smaller than or equal to 25, of $\alpha$ for which Add = 0.

**14.** A determining system for determining a parameter of a progression profile (320, 420, 610, 620) for an eyepiece (710, 720) intended for a user, the determining system being configured to:

obtain (110) a prescription for the user, the prescription being indicative of at least an optical power suitable for far vision,
measure (140) or estimate (160) a remaining accommodation of the user, said remaining accommodation corresponding to the maximum ability of the user to accommodate, and
determine (170) a parameter of the progression profile based on both the prescription and the remaining accommodation.

**15.** A system (800) comprising:

an eyepiece (710, 720) according to any one of claims 11 to 13,
an eyepiece identifier (820) uniquely associated with the eyepiece, and
a user record (850) of a user being an intended user of the eyepiece,
wherein the user record is stored in a database (840),
wherein the user record includes a prescription of the user and the measured or estimated remaining accommodation of the user, and
wherein the eyepiece identifier is linked to the user record.

**FIG. 1**

**FIG. 2**

**FIG. 3**

**FIG. 4**

**FIG. 5**

FIG. 6

**FIG. 7**

**FIG. 8**

Europäisches
Patentamt

European
Patent Office

Office européen
des brevets

# EUROPEAN SEARCH REPORT

**Application Number**

EP 24 31 5233

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 4 197 426 A1 (ESSILOR INT [FR]) 21 June 2023 (2023-06-21) * the whole document * ----- | 1-3,5-8, 11,14 | INV. G02C7/02 G02C7/06 G02C7/08 G02B27/01 |
| X | US 2023/408844 A1 (ROUSSEL OLIVIER [FR] ET AL) 21 December 2023 (2023-12-21) * the whole document * ----- | 1-4, 7-11,14 | |
| Y | | 13 | |
| X | Essilor Academy: "PROGRESSIVE LENSES FITTING GUIDE", , 30 December 2020 (2020-12-30), XP055924535, Retrieved from the Internet: URL:https://web.archive.org/web/2020123014 1711/http://www.essiloracademy.eu/pdf_serv er.php?file=/sites/default/files/Guide_ENG LISH.pdf [retrieved on 2022-05-24] * page 13 * ----- | 1,2,11, 14 | |
| X | WO 2009/120757 A1 (PIXELOPTICS INC [US]; MCGINN JOSEPH THOMAS [US] ET AL.) 1 October 2009 (2009-10-01) * page 17 - page 18; figures 9C-F * ----- | 1-3,8, 11-14 | TECHNICAL FIELDS SEARCHED (IPC) G02C G02B |
| Y | | 13,15 | |
| Y | US 2016/161766 A1 (ARCHAMBEAU SAMUEL [FR] ET AL) 9 June 2016 (2016-06-09) * paragraph [0110] - paragraph [0111] * * paragraph [0129] - paragraph [0130] * ----- | 15 | |

The present search report has been drawn up for all claims

| Place of search | Date of completion of the search | Examiner |
|---|---|---|
| Munich | 22 October 2024 | Klein, Thomas |

EPO FORM 1503 03.82 (P04C01)

## ANNEX TO THE EUROPEAN SEARCH REPORT
## ON EUROPEAN PATENT APPLICATION NO.

EP 24 31 5233

This annex lists the patent family members relating to the patent documents cited in the above-mentioned European search report.
The members are as contained in the European Patent Office EDP file on
The European Patent Office is in no way liable for these particulars which are merely given for the purpose of information.

22-10-2024

| Patent document cited in search report | | | Publication date | Patent family member(s) | | Publication date |
|---|---|---|---|---|---|---|
| EP | 4197426 | A1 | 21-06-2023 | CN | 116266016 A | 20-06-2023 |
| | | | | EP | 4197426 A1 | 21-06-2023 |
| | | | | US | 2023190093 A1 | 22-06-2023 |
| US | 2023408844 | A1 | 21-12-2023 | AU | 2021382388 A1 | 11-05-2023 |
| | | | | CN | 116457720 A | 18-07-2023 |
| | | | | EP | 4248265 A1 | 27-09-2023 |
| | | | | KR | 20230104179 A | 07-07-2023 |
| | | | | US | 2023408844 A1 | 21-12-2023 |
| | | | | WO | 2022106701 A1 | 27-05-2022 |
| WO | 2009120757 | A1 | 01-10-2009 | NONE | | |
| US | 2016161766 | A1 | 09-06-2016 | AU | 2014298460 A1 | 18-02-2016 |
| | | | | AU | 2014298461 A1 | 18-02-2016 |
| | | | | BR | 112016001756 A2 | 01-08-2017 |
| | | | | BR | 112016002010 A2 | 01-08-2017 |
| | | | | CN | 105452941 A | 30-03-2016 |
| | | | | CN | 105452942 A | 30-03-2016 |
| | | | | CN | 112835211 A | 25-05-2021 |
| | | | | EP | 2833196 A1 | 04-02-2015 |
| | | | | EP | 3028094 A1 | 08-06-2016 |
| | | | | EP | 3028095 A1 | 08-06-2016 |
| | | | | ES | 2576489 T3 | 07-07-2016 |
| | | | | JP | 7023603 B2 | 22-02-2022 |
| | | | | JP | 2016525721 A | 25-08-2016 |
| | | | | JP | 2016525722 A | 25-08-2016 |
| | | | | KR | 20160039194 A | 08-04-2016 |
| | | | | KR | 20160040536 A | 14-04-2016 |
| | | | | KR | 20210059008 A | 24-05-2021 |
| | | | | US | 2016161766 A1 | 09-06-2016 |
| | | | | US | 2016178933 A1 | 23-06-2016 |
| | | | | WO | 2015014910 A1 | 05-02-2015 |
| | | | | WO | 2015014911 A1 | 05-02-2015 |

For more details about this annex : see Official Journal of the European Patent Office, No. 12/82